**Europäisches Patentamt**

**European Patent Office**

**Office européen des brevets**

(11) Numéro de publication : **0 489 648 A1**

## (12) DEMANDE DE BREVET EUROPEEN

(21) Numéro de dépôt : **91403273.5**

(22) Date de dépôt : **03.12.91**

(51) Int. Cl.$^5$ : **B23K 35/30, C22C 38/48**

(30) Priorité : **04.12.90 FR 9015169**

(43) Date de publication de la demande :
**10.06.92 Bulletin 92/24**

(84) Etats contractants désignés :
**AT BE CH DE DK ES FR GB GR IT LI LU NL SE**

(71) Demandeur : **TECPHY**
**Elysées La Défense 4, 19, Le Parvis**
**F-92800 Puteaux (FR)**

(72) Inventeur : **Michaud, Hervé**
**29, rue Voltaire**
**F-42100 Saint-Etienne (FR)**
Inventeur : **Dhers, Jean**
**2, boulevard Augustin Thierry**
**F-42000 Saint-Etienne (FR)**
Inventeur : **Bollinger, Etienne**
**88, avenue du Casino**
**F-59240 Dunkerque (FR)**

(74) Mandataire : **Lanceplaine, Jean-Claude et al**
**CABINET LAVOIX 2, Place d'Estienne d'Orves**
**F-75441 Paris Cédex 09 (FR)**

(54) **Acier inoxydable utilisable notamment pour la réalisation de revêtement d'outils travaillant à chaud et outils comportant unrevêtement en un tel acier inoxydable.**

(57)    La présente invention a pour objet un acier inoxydable utilisable notamment pour la réalisation de revêtement ou le rechargement d'outils travaillant à chaud tels que des rouleaux de coulée continue d'acier ou encore des poinçons et matrices de presses d'emboutissage.
   L'acier inoxydable a une composition pondérale suivante :
- carbone         : 0,1 à 0,15%
- chrome          : 10,5 à 12,5%
- nickel          : 2 à 2,5%
- molybdène       : 1 à 1,5%
- manganèse       : 0,8 à 1,2%
- silicium        : 0,3 à 0,7%
- niobium         : 0,2 à 0,25%
- vanadium        : 0,1 à 0,2%,
le reste étant du fer.

EP 0 489 648 A1

La présente invention a pour objet un acier inoxydable utilisable notamment pour la réalisation de revêtement ou le rechargement d'outils travaillant à chaud.

La présente invention a également pour objet un outil travaillant à chaud comportant un revêtement ou un rechargement en un tel acier inoxydable et l'utilisation d'un tel acier inoxydable.

Pour augmenter la durée de vie en service d'outils travaillant à chaud, il est connu de revêtir ceux-ci d'un acier inoxydable de haute dureté, par exemple un acier inoxydable à 13% de chrome.

De tels revêtements sont couramment réalisés par des procédés comme par exemple de fusion sous flux d'un fil d'un métal d'apport.

Plusieurs passes de soudage successives permettent de déposer des revêtements d'environ 15mm d'épaisseur.

Il est connu, dans un exemple de réalisation, un revêtement de rouleaux de coulée continue d'acier dont la composition pondérale est la suivante:
- carbone : 0,12%
- chrome : 11,5%
- nickel : 2%
- molybdène : 1%
- manganèse : 1%
- silicium : 0,4%
- soufre : 0,01%
- phosphore : 0,01%

Ces aciers utilisés pour le revêtement d'outils travaillant à chaud ont pour principal inconvénient de se détériorer, dans le temps, par fatigue thermique et/ou fatigue à la corrosion.

La présente invention a pour but d'améliorer les caractéristiques à la fatigue et à la corrosion des aciers inoxydables utilisés comme revêtement ou rechargement d'outils travaillant à chaud.

La présente invention a donc pour objet un acier inoxydable utilisable notamment pour la réalisation de revêtement ou le rechargement d'outils travaillant à chaud, caractérisé en ce que sa composition pondérale est la suivante :
- carbone : 0,1 à 0,15%
- chrome : 10,5 à 12,5%
- nickel : 2 à 2,5%
- molybdène : 1 à 1,5%
- manganèse : 0,8 à 1,2%
- silicium : 0,3 à 0,7%
- niobium : 0,2 à 0,25%
- vanadium : 0,1 à 0,2%,

le reste étant du fer.

On impose des teneurs résiduelles inférieures à 50ppm pour le soufre, inférieures à 50ppm pour le bore et inférieures à 100ppm pour le phosphore.

Le fait de réduire, voir d'éliminer les éléments tels que le soufre, le phosphore et le bore améliore de façon conséquente le comportement à la fatigue thermique et à la corrosion.

En effet, il a été constaté que le phosphore favorise une phase intermétallique fragilisante et que le soufre favorise une corrosion localisée par piqûres, les piqûres générant une propagation de la corrosion.

Selon d'autres caractéristiques de l'invention :
– la composition pondérale de l'acier comprend, en outre, entre 100 et 400 ppm d'azote,
– l'acier est élaboré sous forme de poudre préalliée par atomisation sous gaz neutre,
– le gaz neutre est choisi parmi l'azote ou l'argon,
– la granulométrie de la poudre est inférieure à 200 microns pour un revêtement par exemple par compaction isostatique à chaud,
– la granulométrie de la poudre est comprise dans un intervalle de 20 à 160 microns, pour un revêtement par exemple par rechargement par plasma d'arc transféré,

Lors de l'élaboration de la poudre, il a également été constaté que le soufre a tendance à ségréger en surface des microbilles de poudre et à former, lors de leur projection au moyen d'une technique par exemple de rechargement par plasma d'arc transféré, un réseau favorisant des sites de corrosion et une hétérogénéité de composition chimique.

La présente invention a également pour objet un outil travaillant à chaud, caractérisé en ce qu'il comporte sur tout ou partie de sa surface un revêtement en acier inoxydable dont la composition pondérale est mentionnée ci-dessus.

L'acier inoxydable selon la présente invention est utilisable pour la réalisation de revêtement d'outils travaillant notamment à chaud tels que des rouleaux de coulée continue d'acier par exemple ou encore des poinçons et/ou des matrices de presses d'emboutissage.

Par exemple, un acier inoxydable selon l'invention présente la composition pondérale suivante :

- carbone         : 0,11%
- chrome          : 11,10%
- nichel          : 2,3%
- molybdène       : 1,16%
- manganèse       : 0,89%
- silicium        : 0,49%
- niobium         : 0,25%
- vanadium        : 0,16%,

le reste étant du fer et les teneurs en soufre, bore, phosphore, oxygène et azote étant résiduelles.

Le carbone étant destiné à se combiner avec le niobium et le vanadium en vue de former des carbures, la teneur de cet élément ne doit pas être supérieure à 0,15% car au-delà, on constate une mauvaise soudabilité ainsi que des risques de fissuration à chaud.

L'effet du niobium et du vanadium améliore la résistance à l'oxydation et à la corrosion et la résilience à chaud de l'acier.

Si les teneurs de ces éléments sont trop basses, moins de 0,2% de niobium et moins de 0,1% de vanadium, on observe un risque de précipitations de carbures de chrome néfastes pour la corrosion et les caractéristiques à chaud.

Une teneur en chrome relativement basse, à savoir inférieure à 12,5% est nécessaire pour augmenter la ténacité de l'acier mais ne doit pas descendre en dessous de 10% afin de bénéficier de l'effet du niobium.

La présence de nickel améliore la soudabilité de l'acier mais au-delà de 2,5% ses propriétés risquent de se dégrader.

L'acier selon la présente invention est mis sous la forme d'une poudre préalliée par atomisation sous gaz neutre dont la granulométrie est inférieure à 200 microns pour une compaction isostatique à chaud et comprise dans l'intervalle de 20 à 160 microns pour un rechargement par plasma d'arc transféré.

On entend par poudre préalliée une poudre dont chaque grain a la composition de l'acier.

Dans cette composition, la teneur en bore est inférieure à 50ppm, celle du soufre est inférieure à 50ppm, celle du phosphore est inférieure à 100ppm et celle de l'azote est comprise entre 100 et 400 ppm.

Les poudres obtenues par atomisation au gaz neutre sont projetées sur les parties actives de l'outil par un procédé de rechargement par arc plasma transféré (P.T.A).

Le procédé consiste à créer une différence de potentiel électrique entre une électrode et la pièce à revêtir. On réalise sous le champ électrique obtenu, un plasma par l'apport contrôlé d'un gaz plasmagène, le plasma s'étendant entre l'électrode et ladite pièce à revêtir.

La poudre de l'acier inoxydable selon la présente invention est introduite, par projection, sous l'effet d'un flux de gaz dans le plasma, et la poudre est projetée à l'état fondu sur la pièce à revêtir.

Il convient de noter que la teneur en oxygène dans la poudre est limitée à moins de 400 ppm.

En effet, une teneur en oxygène trop élevée conduirait d'une part, à la formation de porosités dans le dépôt, et d'autre part, à la formation de "crasses" lors de la fusion de la poudre qui seraient entrainées dans le revêtement, de tels défauts étant très néfastes à la qualité du revêtement.

Avantageusement l'atomisation sous gaz neutre, et notament sous azote ou argon permet de limiter l'oxydation superficielle des grains cons-tituant la poudre.

Pour ce procédé de rechargement, une teneur tituant la poudre.

Pour ce procédé de rechargement, une teneur minimale en silicium est nécessaire pour assurer une bonne fluidité de la poudre en fusion et une aptitude au dépôt sur l'outil.

Par contre un excès de silicium, en l'occurence plus de 0,7%, est pénalisant pour la résistance à la corrosion.

L'épaisseur du revêtement peut être d'environ 10mm et le dépot peut être réalisé en plusieurs passes.

Le procédé de réalisation du revêtement par arc plasma transféré a pour avantage l'obtention de couches métalliques de structure fine, avec des taux de dilution très bas, une porosité très faible comparativement aux couches métalliques obtenues par fusion sous flux d'un fil de métal d'apport.

Le procédé de revêtement par compaction isostatique à chaud (CIC) consiste à assurer la densification, sans refusion de la poudre d'acier et le soudage diffusion sur la pièce à revêtir par une action simultanée d'une température dans un conteneur constitué par la pièce à revêtir et une enveloppe en tôle d'acier, qui est éliminée ultérieurement par usinage. A la suite de la compaction, un traitement thermique approprié permet de restaurer les caractéristiques de l'acier du substrat.

L'acier inoxydable selon la présente invention utilisé par exemple sous la forme de poudre permet d'une part la réalisation d'un revêtement ou d'un rechargement dense, homogène et d'autre part, la réalisation d'outils travaillant à chaud et ayant des caractéristiques à la fatigue thermique et à la corrosion améliorées, l'absence de soufre, de phosphore et de bore dans l'acier inoxydable selon la présente invention conférant à celui-ci une meilleure résistance mécanique à haute température.

**Revendications**

1.  Acier inoxydable utilisable notamment pour la réalisation de revêtement ou le rechargement d'outils travaillant notamment à chaud, caractérisé en ce que sa composition pondérale est la suivante :
    - carbone          : 0,1 à 0,15%
    - chrome           : 10,5 à 12,5%
    - nickel           : 2 à 2,5%
    - molybdène        : 1 à 1,5%
    - manganèse        : 0,8 à 1,2%
    - silicium         : 0,3 à 0,7%
    - niobium          : 0,2 à 0,25%
    - vanadium         : 0,1 à 0,2%,
    le reste étant du fer.

2.  Acier inoxydable selon la revendication 1, caractérisé en ce que la composition pondérale de l'acier comprend, en outre, entre 100 et 400ppm d'azote.

3.  Acier inoxydable selon la revendication 1 ou 2, caractérisé en ce qu'il est élaboré sous la forme de poudre préalliée par atomisation sous gaz neutre.

4.  Acier inoxydable selon la revendication 3, caractérisé en ce que le gaz neutre est choisi parmi l'azote ou l'argon.

5.  Acier inoxydable selon la revendication 3, caractérisé en ce que la granulométrie de la poudre est inférieure à 200 microns.

6.  Acier inoxydable selon les revendications 3 et 5, caractérisé en ce que la granulométrie de la poudre est comprise dans un intervalle de 20 à 160 microns.

7.  Outil travaillant à chaud, caractérisé en ce qu'il comporte sur tout ou partie de sa surface un revêtement ou un rechargement en acier inoxydable selon l'une quelconque des revendications 1 à 6.

8.  Utilisation d'un acier inoxydable selon l'une quelconque des revendications 1 à 6, pour le revêtement ou le rechargement d'outils travaillant notamment à chaud tels que des rouleaux de coulée continue d'acier ou des poinçons et matrices de presses d'emboutissage.

**Office européen des brevets**

## RAPPORT DE RECHERCHE EUROPEENNE

Numero de la demande

EP 91 40 3273

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 091 253 (BAGSHAW et al.)<br>* Revendications 1-4; colonne 3, lignes 8-30 *<br>--- | 1 | B 23 K 35/30<br>C 22 C 38/48 |
| Y | FR-A-2 410 053 (BRITISH STEEL CORP.)<br>* Revendications 1,2 *<br>--- | 1,3 | |
| Y | FR-A-2 025 001 (AKTIEBOLAGET BOFORS)<br>* Revendications 1-3,5; page 3, lignes 25-28 *<br>--- | 1,3 | |
| A | FR-A-2 380 835 (GRANGES NYBY AB)<br>* Revendications 1-3 *<br>--- | 1,3 | |
| A | GB-A- 730 272 (WILLIAM JESSOP & SONS LTD)<br>* Revendications 1,2 *<br>----- | 1 | |

**DOMAINES TECHNIQUES RECHERCHES (Int. Cl.5)**

B 23 K
C 22 C

Le présent rapport a été établi pour toutes les revendications

| Lieu de la recherche | Date d'achèvement de la recherche | Examinateur |
|---|---|---|
| LA HAYE | 12-02-1992 | LIPPENS M.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)